# EUROPÄISCHE PATENTSCHRIFT

(11) **EP 0 679 687 B1**
(45) Veröffentlichungstag und Bekanntmachung des Hinweises auf die Patenterteilung: **07.06.2000**
(21) Anmeldenummer: 95105876.7
(22) Anmeldetag: 20.04.1995
(51) Int. Cl.: C08L 25/04

(54) **Härtbare Formmasse**
Durable moulding composition
Mélange à mouler durable

(30) Priorität: 28.04.1994 DE 4414873
(43) Veröffentlichungstag der Anmeldung: 02.11.1995
(73) Patentinhaber: DSM RESINS B.V., 8022 AW Zwolle (NL)
(72) Erfinder: Hesse, Anton, Dr., D-69469 Weinheim (DE); Mussler, Ingrid, D-67069 Ludwigshafen (DE); Schwäbisch, Hans, D-76764 Rheinzabern (DE); Zwecker, Joachim, Dr., D-69469 Weinheim (DE)
(74) Vertreter: den Hartog, Jeroen Hendrikus Joseph

(56) Entgegenhaltungen:
- EP-A- 0 419 977
- EP-A- 0 525 510
- EP-A- 0 572 851
- EP-A- 0 592 910

## Beschreibung

Die Erfindung betrifft eine härtbare Formmasse auf der Basis einer Dispersion eines Ethylen- oder Propylenpolymerisats in der Lösung eines amorphen Thermoplasten in einem Vinylaromaten; ferner ein Verfahren zur Herstellung dieser Formmasse durch Lösen des Olefinpolymerisats und des Thermoplasten bei erhöhter Temperatur in dem Vinylaromaten und anschließende Abkühlung in einem Scherfeld, sowie die Verwendung der Formmasse zum Abmischen mit ungesättigten Polyesterharzen.

Dispersionen von feinverteilten Propylenpolymerisaten bzw. Ethylenpolymerisaten in ungesättigten Polyesterharzen (UP-Harze) sind aus EP-A 525 510 und EP-A 572 844 bekannt. Die derart modifizierten UP-Harze ergeben nach der Härtung Formkörper mit hervorragenden Oberflächeneigenschaften und guter Zähigkeit. Zur Herstellung dieser Dispersionen werden Schmelzen des Olefinpolymerisats und eines ungesättigten Polyesters in einem starken Scherfeld vermischt und anschließend mit Styrol versetzt. Das Vermischen der Schmelzen ist nicht unproblematisch; außerdem hat es sich gezeigt, daß sehr hochmolekulare Polyolefine, insbesondere aber Abfälle von Polyethylenfolien nicht mit der Schmelze des ungesättigten Polyesters vermischt werden können.

Der Erfindung lag also die Aufgabe zugrunde, eine Dispersion eines Ethylen- bzw. Propylenpolymerisats in einem vinylaromatischen Monomeren bereitzustellen, welche sich ohne Probleme mit einem UP-Harz abmischen läßt. Die naheliegendste Lösung dieser Aufgabe, nämlich die Dispergierung des Olefinpolymerisats in Styrol führt nicht zum Ziel, da bei der Abkühlung einer Lösung des Polyolefins in Styrol das Polyolefin koaguliert.

Es wurde nun gefunden, daß sich Ethylen- bzw. Propylenpolymerisate problemlos in vinylaromatischen Monomeren dispergieren lassen, wenn man bei der Herstellung der Dispersion durch Lösen des Olefinpolymerisats im heißen Monomeren ein amorphes, thermoplastisches Polymeres zusetzt.

Gegenstand der Erfindung ist demzufolge eine härtbare Formmasse, enthaltend
A. 90 - 30 Gew.-% eines vinylaromatischen Monomeren,
B. 5 - 40 Gew.-% eines teilkristallinen Ethylen- oder Propylenpolymerisats,
c. 5 - 30 Gew.-% eines in A löslichen, amorphen, thermoplastischen Polymeren,
wobei sich A+B+C auf 100 % addieren, sowie gegebenenfalls
D. übliche Zusatzstoffe,
wobei die Formmasse weniger als 10 Gew.-%, bezogen auf A+B+C, ungesättigte Polyester enthält.

Die Formmasse enthält vorzugsweise weniger als 1 Gew.-%, bezogen auf A+B+C, und insbesondere überhaupt keine ungesättigten Polyester.

Zu den einzelnen Komponenten ist folgendes zu sagen:
A. Bevorzugtes vinylaromatisches Monomer ist Styrol, daneben sind grundsätzlich auch α-Methylstyrol, Vinyltoluol, tert.Butylstyrol und Divinylbenzol geeignet; ferner Mischungen dieser Monomeren mit Styrol, sowie Mischungen von vinylaromatischen Monomeren, insbesondere Styrol mit untergeordneten Anteilen anderer Vinylmonomerer, wie Methylmethacrylat oder Vinylacetat.
B. Ethylenpolymerisate im Sinne der Erfindung sind kristalline Homopolymerisate des Ethylens und Copolymerisate mit weniger als 50 Mol-%, insbesondere 0 bis 40 Mol-% üblicher Comonomerer. Als Comonomere finden α-Olefine mit 3 bis 8 C-Atomen, wie Propylen, Isobuten, Buten-1 Verwendung. Ferner sind auch Vinylester organischer Carbonsäuren mit 1 bis 19 C-Atomen, vorzugsweise Vinylacetat, Vinylhalogenide wie Vinylchlorid, (Meth)acrylsäure, ihre Ester, die 1 bis 8 C-Atome in der Alkoholkomponente enthalten, ihre Nitrile und Amide, wie beispielsweise Methylmethacrylat, Ethylacrylat, Butylacrylat, (Meth)acrylnitril, ggf. substituiertes (Meth)acrylamid geeignet. Auch Pfropfcopolymerisate sind geeignet, beispielsweise solche mit Maleinsäureanhydrid als Pfropfcomonomer.
   Bevorzugtes Ethylenpolymerisat ist Hochdruckpolyethylen, daneben sind auch nach dem Niederdruck- und Mitteldruckverfahren hergestellte Polyethylentypen gut geeignet.
   Es können auch Gemische verschiedener Ethylenpolymerisate eingesetzt werden, wobei sich die Komponenten durch ihr Molekulargewicht, die Polarität und den Schmelzpunkt deutlich unterscheiden können. Ebenso kann man von Abmischungen von Ethylenpolymerisaten mit untergeordneten Mengen anderer Thermoplaste, z.B. von Polypropylen ausgehen, insbesondere von einem niedermolekularen, thermisch abgebauten Polypropylen, oder von einem mit Maleinsäureanhydrid gepfropften Polypropylen. Die Abmischung der verschiedenen Polymerisate erfolgt entweder vor oder während der Dispergierung in Komponente A.
   Besonders vorteilhaft ist, daß im Rahmen der vorliegenden Erfindung auch verhältnismäßig hochmolekulare Ethylenpolymerisate, z.B. mit einem Molekulargewicht Mn von höher als 250.000 eingesetzt werden können, bzw. mit Schmelzindexwerten von kleiner als 1 [g/10 min], gemessen nach DIN 53 735 bei 190°C und 2,16 kg Belastung. Das bedeutet, daß auch Abfälle von Polyethylenfolien, bei denen der Schmelzindex des Polyethylens üblicherweise zwischen 0,2 und 0,8 [g/10 min] liegt, verwendet werden können.
   Die Propylenpolymerisate sind teilkristallin, ihr Kristallitschmelzpunkt soll höher als 125°C, vorzugsweise höher als 155°C sein. Besonders geeignet ist Polypropylen, das durch Polymerisation von Propylen in Gegenwart eines Ziegler-Natta-Katalysatorsystems hergestellt wird.
   Geeignet sind auch Copolymerisate, hergestellt durch statistische Copolymerisation von Propylen mit Ethylen, Buten-1, Penten-1, 3-Methylpenten-1, Hexen-1, Hepten-1 oder Octen-1 oder Dienen, wie z.B. Norbornadien oder Dicyclopentadien, mit einem Propylengehalt von größer als 50 %.
   Verwendet werden können auch Polymerblends, bei denen dem Olefinpolymerisat bis zu 50 Gew.-% anderer thermoplastischer Kunststoffe, wie z.B. Polyamide, gesättigte Polyester, Styrolpolymerisate, Polyethylen oder Polycarbonat zugemischt wurden.
   Die Ethylen- bzw. Propylenpolymerisate sind in der erfindungsgemäßen Formmasse in Mengen von 5 bis 40, vorzugsweise von 10 bis 30 Gew.-%, bezogen auf A+B+C, enthalten.
C. Komponente C sind in A bei Raumtemperatur lösliche, amorphe, thermoplastische Polymere. Bevorzugt sind Styrolpolymerisate, wie z.B. Homopolystyrol; statistische Copolymerisate und Blockcopolymerisate des Styrols mit Butadien oder Isopren, Acrylnitril, (Meth-)Acrylaten, wie Methylmethacrylat und n-Butylacrylat, oder Vinylestern; ferner Mischungen von Polystyrol oder Styrolcopolymeren mit Kautschuken, wie z.B. schlagfestes Polystyrol; sowie Pfropfpolymerisate des Styrols auf Polyether oder gesättigte Polyester. Grundsätzlich können auch andere Polymerisate, z.B. von (Meth-)Acrylsäureestern und Vinylestern eingesetzt werden, z.B. Polymethylmethacrylat und Copolymerisate des Methylmethacrylats z.B. mit (Meth-)Acrylsäure, sowie Polyvinylacetat und Copolymerisate des Vinylacetats mit Crotonsäure. Schließlich sind auch Kondensationspolymere, wie gesättigte Polyester, Celluloseester, Celluloseether und thermoplastische Polyurethane geeignet.
   Die Thermoplasten C sind in der erfindungsgemäßen Formmasse in Mengen von 5 bis 30, vorzugsweise 10 bis 25 Gew.-%, bezogen auf A+B+C, enthalten.
D. Die erfindungsgemäße Formmasse kann übliche Zusatzstoffe enthalten, wie z.B. Inhibitoren, Viskositätserniedriger und Wachse.

Bei der Herstellung der erfindungsgemäßen Formmasse löst man unter Erwärmen und Rühren die Komponenten B und C, zweckmäßigerweise als Granulate oder Pulver, in dem Vinylaromaten A. Bei manchen leicht löslichen Ethylenpolymerisaten, z.B. Ethylen/Vinylacetat-Copolymeren reicht schon eine Erwärmung auf über 50°C aus; im allgemeinen erfolgt die Lösung aber oberhalb von 80°C. Bei Polyethylen sind Temperaturen zwischen 90° und 110°C, bei Polypropylen zwischen 100° und 140°C bevorzugt. An dieser Stelle können auch die Zusatzstoffe D, bevorzugt als styrolische Lösung, zugegeben werden. Man läßt dann die Lösung in einem Scherfeld abkühlen, wobei einfache Rühraggregate, z.B. Ankerrührer oder Dissolver ausreichen.

Es wird angenommen, daß sich in der flüssigen Phase zunächst eine Dispersion einer Vinylaromat/Thermoplast-Lösung als disperse Phase in einer Vinylaromat/Olefinpolymerisat-Lösung bildet. Beim Abkühlen tritt dann Phaseninversion ein, wobei das Olefinpolymerisat B die disperse Phase in der Vinylaromat/Thermoplast-Lösung darstellt. Der Thermoplast kann dabei eine Schutzkolloidwirkung übernehmen und die Dispersion stabilisieren. Das Ethylen- bzw. Propylenpolymerisat liegt in dieser Dispersion in Form fester, runder Partikel mit einem mittleren Durchmesser von 1 bis 200, vorzugsweise von 10 bis 100 µm vor. Die erfindungsgemäße Dispersion ist gut lagerfähig; sie rahmt nicht auf, da die disperse und die kohärende Phase etwa gleiche Dichte haben.

Die erfindungsgemäße Formmasse kann nach Zusatz von radikalischen Initiatoren direkt zu Formkörpern gehärtet werden. Bevorzugt ist aber die Verwendung der Formmasse als Zusatz zu üblichen ungesättigten Polyesterharzen, und zwar im Gewichtsverhältnis 10:90 bis 50:50, vorzugsweise von 20:80 bis 40:60. Als Polyesterharze kommen dabei die UP-Harze im engeren Sinne, sowie Vinylester- und Vinylesterurethan-Harze, jeweils bevorzugt als styrolische Lösungen, in Frage.

Derartige Mischungen können z.B. zur Herstellung von SMC- und BMC-Massen eingesetzt werden, wobei ihnen kurz vor der Weiterverarbeitung übliche Radikalinitiatoren zugefügt werden, gegebenenfalls zusammen mit Füllstoffen, Fasern, Trennmitteln, Gleitmitteln und Eindickmitteln. Will man SMC-Massen herstellen, dann wird die Masse mit Verstärkungsfasern zusammen zu einem flächigen Halbzeug geformt und eingedickt.

Die so erhaltene wärmehärtbare Formmasse liegt als flächiges Halbzeug (SMC), als teigförmige Masse (BMC), als rieselfähige Spritzgußmasse oder als Paste vor. Die Weiterverarbeitung kann dementsprechend nach verschiedenen Methoden vorgenommen werden: SMC-Massen werden in Pressen, BMC-Massen und rieselfähige Massen durch Spritzgießen oder Spritzprägen und Pasten durch Pultrusion verformt. Während oder nach dem Verformen erfolgt die Härtung des Polyesterharzes, vorzugsweise bei Temperaturen oberhalb von 50°C, insbesondere zwischen 120 und 170°C.

Nach der Härtung bleibt das Ethylen- bzw. Propylenpolymerisat als disperse Phase im gehärteten Polyesterharz als kohärenter Phase. Es bewirkt im Formteil eine drastische Verminderung der Rißanfälligkeit bei Stoßbeanspruchung, wobei aber der Duromercharakter der Formteile, d.h., hohe Wärmeformbeständigkeit und gute Oberflächeneigenschaften, erhalten bleiben.

Anwendungsgebiete der erfindungsgemäßen Formmassen sind die Herstellung von Automobilteilen, z.B. im Karosseriebereich, Motorhauben, Heckklappen, Stoßfängerträger, Frontends und im Motorbereich Schallabschirmungen, Ansaugkrümmer und Abdeckungen, ferner Ersatzradmulden, Rückenlehnen für Sitze und Reflektoren für Scheinwerfer. Daneben spielen auch Anwendungen im Elektrosektor eine Rolle, z.B. die Herstellung von Verteilerkästen, Langfeldleuchten und Gehäusen für Elektroanlagen.

Die in den Beispielen genannten Prozente und Teile beziehen sich auf das Gewicht.

### Beispiele

A. Die Komponente A ist in allen Beispielen Styrol.
B1. Ethylenhomopolymerisat mit
   Schmelzindex MFI (190/2,16) 36 [g/10 min]
   Schmelzpunkt (DSC): 112 [°C]
   Dichte: 0,924 [g/cm³]
B2. Ethylenhomopolymerisat mit
   Schmelzindex MFI (190/2,16) 20 [g/10 min]
   Schmelzpunkt (DSC): 106 [°C]
   Dichte: 0,916 [g/cm³]
B3. Polyethylenwachs mit aliphatischen Aminogruppen
   In einem gerührten 1-1-Autoklaven mit einem L/D-Verhältnis von 5 wurden 12,0 kg/h Ethylen, 0,6 l/h Dimethylaminoethylacrylat bei 1.500 bar und 240°C kontinuierlich polymerisiert. Die Einstellung des gewünschten Molekulargewichts von etwa 25.000 erfolgte durch Zudosierung von Propionaldehyd. Es wurden stündlich 3,6 kg Produkt ausgetragen. Der Gehalt an Comonomer betrug 12,5 %, die Viskosität nach DIN 51 562 4.500 [cSt]. (Ubbelohde, 120°C).
C1. Styrolhomopolymerisat mit Volumenfließindex MVI (200/5) von 10 [cm³/10 min] (DIN 53 735) und Dichte 1.05 [g/cm³]
C2. 3-Blockcopolymer aus Styrol (30 %) und Butadien (70 %) mit einem mittleren Molekulargewicht von 75 000.
C3. Methylmethacrylathomopolymerisat mit einer Dichte von 1.18 [g/cm³] und Volumenfließindex (230/3.8): 12.8 [cm³/10 min] (ISO 1133).
C4. Copolymerisat aus Methylmethacrylat und Methacrylsäure mit Säurezahl 6.5 und einem mittleren Molekulargewicht von 130 000.
C5. Pfropfpolymerisat aus Styrol und Polyethylenglykol
   97,3 Teile eines difunktionellen Polyethylenglykols vom Molekulargewicht 9000, 44,5 Teile Toluol, 0,97 Teile Maleinsäureanhydrid und 1,05 Teile Bernsteinsäureanhydrid wurden unter Rühren in Stickstoffatmosphäre aufgeschmolzen und 1 Stunde bei 130°C gehalten. In zwei getrennten Zuläufen wurden eine Lösung von 8,9 Teilen Benzoylperoxid in 41,3 Teilen Toluol innerhalb von 2 Stunden und 475,2 Teile Styrol innerhalb von 1 Stunde zudosiert. Nach weiteren 2 Stunden bei 130°C resultierte eine viskose Dispersion, die zunächst mit 2 Teilen Ameisensäure 15 Minuten gerührt, auf 120°C abgekühlt, mit 0,17 Teilen Hydrochinon versetzt und schließlich mit 825 Teilen Styrol aufgenommen wurde. Es entstand eine trübe Mischung mit einer Viskosität (23°C) von 280 (mPa·s) und einem Trockengehalt von 36,5 %.
C6. Schlagfestes Polystyrol mit einem Polybutadiengehalt von 8 % und einem Volumenfließindex MVI (200/5) von 4 [cm³/10 min] (DIN 53 735).

### UP-Harz

Durch Schmelzekondensation unter Stickstoff bei 195°C wurde ein ungesättigter Polyester aus Maleinsäureanhydrid, o-Phthalsäureanhydrid, Propylenglykol und Dipropylenglykol im Molverhältnis 1:0,2:0,95:0,3 hergestellt und 65 %ig in Styrol gelöst. Die Säurezahl des ungesättigten Polyesters betrug 28. Die styrolische Lösung wurde mit 120 ppm Hydrochinon stabilisiert.

### Beispiele 1 bis 9

In einem 4 1-Rührgefäß mit Ankerrührwerk, N2-Spülung und heizbarem Ölbad wurden bei Raumtemperatur zu 1800 Teilen Styrol nacheinander 0,9 Teile Inhibitor 2,6-Dimethylchinon, 750 Teile Polyethylen B1 und 450 Teile Polystyrol C1 zugemischt und bei einer Rührgeschwindigkeit von 75 U/min auf 100°C erwärmt. Beim Abkühlen innerhalb von 2,5 Stunden auf 23°C resultierte eine fließfähige Dispersion von Polyethylenpartikeln in styrolischer Polystyrollösung mit einer mittleren Partikelgröße von 13,2 µm, einer Viskosität von 4200 mPa·s und einem Trockengehalt von 38,8 %.

In analoger Weise wurden weitere Dispersionen von Ethylenpolymerisaten in styrolischen Polymerlösungen zubereitet, deren Zusammensetzung und Kenndaten in Tabelle 1 zusammengefaßt sind. Es zeigte sich, daß die erfindungsgemäßen Dispersionen mittlere Teilchendurchmesser < 26 µm aufweisen (gemessen mit Laserbeugung Malvern Master Sizer, Fa. Malvern Instruments, nach Verdünnung mit Methylethylketon), fließfähig und sehr gut mit UP-Harzen mischbar waren. Ihre Lagerbeständigkeit war jeweils größer als 4 Wochen. Beim Vergleichsbeispiel resultierte während der Abkühlung eine zusammenhängende, koagulierte Masse, die Styrol als separate Phase enthielt. Trockengehalt und Viskosität ließen sich nicht messen, da keine homogene Dispersion vorlag.

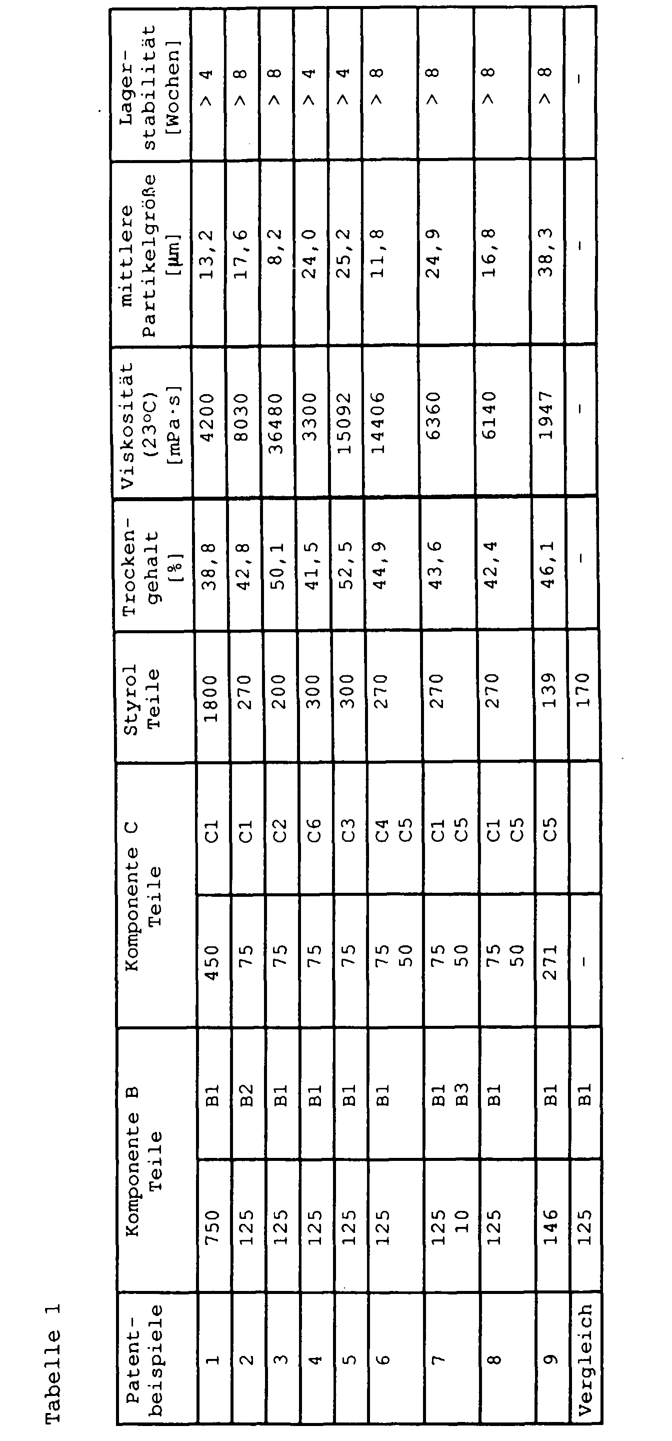

### Beispiel 10

Aus 60 Teilen des UP-Harzes, 40 Teilen Dispersion von Beispiel 8 und 2 Teilen Benzoylperoxid (50 %ig) wurde unter Rühren eine homogene Mischung hergestellt, von der 25 Teile in einem Reagenzglas (185 x 20 mm) bei 80°C im Wärmeschrank gehärtet wurden. Es resultierte ein weißer Gießling mit glänzender Oberfläche und einer mikroporösen Struktur, wie sie für schrumpfkompensierte Formstoffe typisch ist (Rasterelektronenmikroskopische Untersuchung an einer Bruchfläche). Infolge der Ausdehnung des Gießlings war das Reagenzglas geborsten. Zum Vergleich wurde das UP-Harz ohne Zusatz der Dispersion mit 2 % Benzoylperoxid (50 %ig) bei 80°C gehärtet, wobei ein transparenter Gießling mit starkem Schrumpf resultiert.

### Beispiele 11 bis 13

### Herstellung und Prüfung von Naßpreßlaminaten

Mit einem schnell laufenden Rührwerk wurden folgende Mischungen hergestellt:
120 Teile UP-Harz
80 Teile verschiedener Dispersionen
3 Teile tert.Butylperbenzoat
300 Teile Kreide (Millicarb)
8 Teile Zinkstearat

Durch Tränken von 5 Lagen Glasfasermatten (unlöslich gebunden) 80 x 80 mm) wurden Laminate erhalten, die in einem Plattenwerkzeug (100 x 100 x 8 mm) aus Stahl 10 Minuten bei 145° und 200 bar verpreßt wurden. Daraus ließen sich 4 mm dicke Platten (80 x 80 mm) für den Kugelfalltest ausschneiden. Die Ergebnisse des Kugelfalltests sind in Tabelle 2 aufgeführt.

Der Kugelfalltest wird folgendermaßen ausgeführt:

Aus 4 mm dicken Formstoffplatten werden Prüfkörper (80 x 80 mm) ausgearbeitet, zwischen Metallringen (Durchmesser 60 mm) eingespannt und darauf aus 70 cm Höhe eine Stahlkugel (761 g, Durchmesser: 57,1 mm) fallengelassen. Die Zugseite des geschädigten Prüfkörpers wird mit roter Farbstofflösung (Diffusionsrot, Firma H. Klump) eingesprüht, nach 5 min mit Wasser gewaschen, getrocknet und der Durchmesser der roten Schädigungszone ermittelt. Durch die Mitte der Schädigungszone wird aufgeschnitten und an der Schnittfläche die Dicke der roten Zone gemessen (Lupe mit Skala). Je geringer die Zahlenwerte beider Meßgrößen sind, desto unempfindlicher verhalten sich die Formstoffe bei Stoß- oder Schlagbeanspruchung.

**Tabelle 2**

| Patentbeispiel | Dispersion aus Beispiel | Kugelfalltest | |
|---|---|---|---|
| | | Schädigungszone [mm] | Eindringtiefe [mm] |
| 11 | 8 | 15 | 1,7 |
| 12 | 3 | 20 | 2,1 |
| 13 | 2 | 12 | 2,1 |
| Vergleich | - | 20 | 4,0 |

Die geringere Eindringtiefe der erfindungsgemäßen Naßpreßlaminate gegenüber der des Vergleichsversuchs (200 Teile UP-Harz ohne Modifizierung mit Polyethylendispersion) zeigt eine vorteilhaft verminderte Stoßanfälligkeit.

### Beispiel 14

### a) Herstellung einer Dispersion

Aus folgenden Komponenten wurde analog zu Beispiel 1 eine Dispersion hergestellt:
1350 Teile Styrol
250 Teile Komponente C5
375 Teile Komponente C1
625 Teile Komponente B1
0,78 Teile 2,6-Dimethylchinon

Bei Raumtemperatur wurden die Komponenten mit einem Rührwerk vermischt und unter Stickstoff bei 75 Umdrehungen pro Minute auf 100°C erwärmt. Unter weiterem Rühren ließ man innerhalb von 2,5 Stunden auf 23°C abkühlen und erhielt eine Dispersion mit einer mittleren Partikelgröße von 17,3 µm. Der Trockengehalt betrug 41,5 % und die Viskosität (23°C) 4850 [mPa·s].

### b) SMC-Herstellung und Prüfung

Mit Hilfe eines schnell laufenden Rührwerks wurde folgende Harz/Füllstoff-Paste präpariert:
2700 Teile UP-Harz
1800 Teile Dispersion a)
202 Teile Zinkstearat
360 Teile Farbpaste (schwarz)
68 Teile tert.Butylperbenzoat
6750 Teile Füllstoff Kreide (Millicarb)
113 Teile M_{g}O-Paste (Luvatol MK 35)

Die SMC-Herstellung erfolgte auf einer Technikumsanlage, bei der die Harz/Füllstoff-Mischung auf einer Polyethylenfolie mit geschnittenen Glasfaserrovings (2,6 cm lang) vereinigt, aufgerollt und 4 Tage bei 23°C gelagert wurde. Danach ließen sich die Abdeckfolien abziehen, und das klebfreie SMC wurde in einem polierten Stahlwerkzeug 5 min lang unter 50 bar bei 145°C zu 4 mm dicken Platten mit den Abmessungen 250 x 680 mm verpreßt. Der lineare Schwund betrug 0,05 %. Die Platten waren farblich homogen und zeigten einen guten Oberflächenglanz.

## Patentansprüche

1. Härtbare Formmasse, enthaltend
A. 90 - 30 Gew.-% eines vinylaromatischen Monomeren,
B. 5 - 40 Gew.-% eines teilkristallinen Ethylen- oder Propylenpolymerisats,
C. 5 - 30 Gew.-% eines in A löslichen, amorphen, thermoplastischen Polymeren,
wobei sich A+B+C auf 100 % addieren, sowie gegebenenfalls
D. übliche Zusatzstoffe,
dadurch gekennzeichnet, daß die Formmasse weniger als 10 Gew.-%, bezogen auf A+B+C, ungesättigte Polyester enthält.

2. Härtbare Formmasse nach Anspruch 1, dadurch gekennzeichnet, daß sie weniger als 10, vorzugsweise weniger als 1 Gew.-%, bezogen auf A+B+C, und insbesondere überhaupt keine ungesättigten Polyester enthält.

3. Härtbare Formmasse nach Anspruch 1, dadurch gekennzeichnet, daß die Komponente B in Form runder Partikel mit einem mittleren Durchmesser von 1 - 200 µm in einer Lösung von C in A dispergiert ist.

4. Härtbare Formmasse nach Anspruch 1, dadurch gekennzeichnet, daß die Komponente B hochmolekulares Polyethylen, vorzugsweise mit einem Molekulargewicht Mₙ von höher als 250.000 ist.

5. Härtbare Formmasse nach Anspruch 1, dadurch gekennzeichnet, daß die Komponente B ein Recyclat, insbesondere von Polyethylenfolien, ist.

6. Härtbare Formmasse nach Anspruch 1, dadurch gekennzeichnet, daß die Komponente B Polypropylen ist.

7. Herstellung der härtbaren Formmasse nach Anspruch 1, dadurch gekennzeichnet, daß man die Komponenten B und C bei Temperaturen oberhalb von 50°C in A löst und die erhaltene zweiphasige Dispersion in einem Scherfeld auf Raumtemperatur abkühlt.

8. Verwendung der härtbaren Formmasse nach Anspruch 1 zur Abmischung mit ungesättigten Polyesterharzen im Gewichtsverhältnis 10:90 bis 50:50.

## Claims

1. Curable moulding composition, containing
A. 90 to 30 wt.% of a vinyl aromatic monomer,
B. 5 to 40 wt.% of a partially crystalline ethylene or propylene polymer,
C. 5 to 30 wt.% of an amorphous, thermoplastic polymer which is soluble in A,
wherein A+B+C totals 100, and optionally
D. conventional additives,
characterised in that the moulding composition contains less than 10 wt.%, based on A+B+C, of unsaturated polyesters.

2. Curable moulding composition according to claim 1, characterised in that it contains less than 1 wt.%, based on A+B+C, of unsaturated polyesters and in particular no unsaturated polyesters at all.

3. Curable moulding composition according to claim 1, characterised in that component B is dispersed in the form of round particles having an average diameter of 1 to 200 µm in a solution of C in A.

4. Curable moulding composition according to claim 1, characterised in that component B is high-molecular polyethylene, preferably having a molecular weight Mₙ of greater than 250,000.

5. Curable moulding composition according to claim 1, characterised in that component B is a recycled product, in particular of polyethylene sheets.

6. Curable moulding composition according to claim 1, characterised in that component B is polypropylene.

7. Production of the curable moulding composition according to claim 1, characterised in that components B and C are dissolved in A at temperatures of above 50°C and the two-phase dispersion obtained is cooled to room temperature in a shear field.

8. Use of the curable moulding composition according to claim 1 for mixing with unsaturated polyester resins in the weight ratio of 10:90 to 50:50.

## Revendications

1. Matière à mouler durcissable contenant :
A. 90 à 30 % en poids d'un monomère vinylaromatique,
B. 5 à 40 % en poids d'un polymère de l'éthylène ou du propylène partiellement cristallisé,
C. 5 à 30 % en poids d'un polymère thermoplastique amorphe, soluble dans A, les proportions respectives de A + B + C se complétant à 100 %, et le cas échéant
D. des additifs usuels,
caractérisée en ce qu'elle contient moins de 10 % en poids, par rapport à A + B + C, de polyesters insaturés.

2. Matière à mouler durcissable selon la revendication 1, caractérisée en ce qu'elle contient moins de 1 % en poids, par rapport à A + B + C, et de préférence pas du tout de polyesters insaturés.

3. Matière à mouler durcissable selon la revendication 1, caractérisée en ce que le composant B est dispersé sous forme de particules sphériques à un diamètre moyen de 1 à 200 µm dans une solution de C dans A.

4. Matière à mouler durcissable selon la revendication 1, caractérisée en ce que le composant B est un polyéthylène à haut poids moléculaire, de préférence à un poids moléculaire Mₙ supérieur à 250.000.

5. Matière à mouler durcissable selon la revendication 1, caractérisée en ce que le composant B est un produit recyclé, plus spécialement de la feuille de polyéthylène recyclée.

6. Matière à mouler durcissable selon la revendication 1, caractérisée en ce que le composant B est un polypropylène.

7. Préparation de la matière à mouler durcissable selon la revendication 1, caractérisée en ce que l'on dissout les composants B et C dans A à des températures supérieures à 50°C et on refroidit la dispersion obtenue, à deux phases, jusqu'à température ambiante, dans un champ de cisaillement.

8. Utilisation de la matière à mouler durcissable selon la revendication 1 pour des mélanges avec des résines de polyesters insaturés à des proportions relatives en poids de 10:90 à 50:50.
